# EUROPÄISCHE PATENTSCHRIFT

(11) **EP 0 408 712 B1**
(45) Veröffentlichungstag und Bekanntmachung des Hinweises auf die Patenterteilung: **19.05.1993**
(21) Anmeldenummer: 90902253.5
(22) Anmeldetag: 18.01.1990
(51) Int. Cl.: B60S 1/32

(54) **SCHEIBENWISCHER**
WINDSCREEN WIPER
ESSUIE-GLACE

(30) Priorität: 27.01.1989 DE 3902397
(43) Veröffentlichungstag der Anmeldung: 23.01.1991
(73) Patentinhaber: ITT Automotive Europe GmbH, 60488 Frankfurt am Main (DE)
(72) Erfinder: BAUMGARTEN, Peter, D-8630 Coburg (DE); EGNER-WALTER, Bruno, D-7100 Heilbronn (DE); SCHMID, Eckhardt, D-7129 Brackenheim (DE)
(86) Internationale Anmeldenummer: EP9000100
(87) Internationale Veröffentlichungsnummer: WO9008677

(56) Entgegenhaltungen:
- DE-A- 1 938 095
- DE-A- 2 114 102
- DE-A- 2 537 474
- DE-A- 2 638 010
- DE-A- 3 431 936
- FR-A- 1 033 521
- FR-A- 2 196 618
- GB-A- 683 270
- GB-A- 795 075
- GB-A- 1 078 066
- GB-A- 2 047 523
- GB-A- 2 157 551
- US-A- 3 978 543
- US-A- 4 095 308
- US-A- 4 187 576

## Beschreibung

Die Erfindung bezieht sich auf einen Scheibenwischer, insbesondere für Kraftfahrzeuge, mit einem Tragbügel, mit einer Wischleiste und mit Mitteln zur federnden Abstützung der Wischleiste an dem Tragbügel, wobei zu diesen Mitteln zur federnden Abstützung der Wischleiste mehrere in eine erste Richtung zeigende Federzungen und wenigstens eine, entgegengesetzt der ersten Richtung zeigende Federzunge gehören, daß der Tragbügel einen wenigstens annähernd U-förmigen Querschnitt mit zwei Seitenwangen und einen diese Seitenwangen verbindenden Steg aufweist.

Scheibenwischer dieser Art sind aus der DE-A-21 14 102, der DE-A-34 31 936 oder der FR-A-1,033,521 (Figur 7) bekannt. Bei diesen Scheibenwischern wird ein starrer Tragbügel verwendet, an dem über mehrere in Längsrichtung verteilt angeordnete Federzungen eine Gummiwischleiste oder eine diese Gummiwischleiste führende Schiene federnd abgestützt ist. Bei einem solchen Scheibenwischer kann die bei den heute überwiegend serienmäßig verwendeten Scheibenwischern übliche Anpreßdruckfeder zwischen dem Gelenkteil und dem Befestigungsteil des Wischarms eingespart werden und man braucht auch kein Tragbügelsystem, das aus mehreren gelenkig aneinander angeordneten Bügeln besteht. Die Scheibenwischer nach der in den erwähnten Druckschriften bekannten Art können also durchaus Vorteile bezüglich einer kostengünstigen Herstellung aufweisen. Allerdings ist mit ihnen bisher eine allen Anforderungen gerecht werdende Wischwirkung im gesamten Wischfeldbereich nicht erreicht worden.

Aus der FR-A-1,033,521 ist ein Scheibenwischer bekannt, an dessen Tragbügel zwei in entgegengesetzte Richtungen zeigende Federzungen vorgesehen sind, die entweder direkt oder über einen Hebelmechanismus an der Wischleiste angreifen. Dieser Scheibenwischer besitzt den Nachteil, daß die Krafteinleitung auf die Wischleiste an zwei Punkten erfolgt.

Der vorliegenden Erfindung liegt daher die Aufgabe zugrunde, die Wischwirkung dieser Wischblätter mit möglichst einfachen Mitteln so zu verbessern, daß sie einem Vergleich mit den heute üblichen serienmäßigen Scheibenwischern mit einem aus mehreren waagebalkenartig aneinander angelenkten Bügeln zusammengesetzten System standhalten. Dabei soll ein möglichst einfacher Aufbau der Scheibenwischer derart angestrebt werden, daß die benötigten Einzelteile kostengünstig herstellbar und montierbar sind.

Diese Aufgabe wird erfindungsgemäß dadurch gelöst, daß an diesem Tragbügel einzelne die Wischleiste führende und abstützende Krallenbügel mit seitlich abstehenden, koaxial zueinander ausgerichteten Lagerzapfen schwenkbar angelenkt und durch die Federzungen gegen den Tragbügel abgestützt sind und daß jeweils eine Federzunge bzw. ein diesen Federzungen zugeordneter Krallenbügel direkt den Endbereich der Wischleiste beaufschlagen.

Mit einer Vielzahl von einer in einer ersten Richtung zeigenden Federzungen und wenigstens einer Federzunge bzw. einem Federelement in die andere Richtung kann die Anpreßkraftverteilung längs der Wischleiste vor allem im Endbereich wesentlich verbessert werden. Insbesondere kann auf diese Weise sichergestellt werden, daß jeweils eine Federzunge bzw. ein Federelement direkt den Endbereich der Wischleiste beaufschlagt. Dabei können bspw. ausgehend von der Mitte die einzelnen Federzungen bzw. Federelemente in unterschiedliche Richtungen jeweils zum Ende der Wischleiste hin ausgerichtet sein. Die Anzahl der in die erste Richtung zeigenden Federzungen und die Anzahl der in die zweite Richtung zeigenden Federzungen wäre bei einer solchen Ausführung also gleich groß. Bevorzugt wird aber eine Ausführung, bei der neben den in die erste Richtung zeigenden Federzungen nur eine einzige in die zweite Richtung wirkende Federzunge verwendet wird, die dann auf den Endbereich der Wischleiste wirkt.

Es ist nicht unbedingt notwendig, daß die in die unterschiedlichen Richtungen wirkenden Federzungen bzw. Federelemente in gleicher Weise aufgebaut sind. Eine besonders einfache Lösung erhält man aber, wenn alle Elemente als Federzungen ausgebildet sind, die einstückig miteinander verbunden und vorzugsweise aus einem Stahlfederband ausgestanzt sind. Die gesamten Mittel zur federnden Abstützung der Wischleiste sind dann einstückig gefertigt, so daß deren Montage keine Schwierigkeiten bereitet.

Theoretisch könnten die Federzungen direkt oder indirekt am Rücken der Wischleiste oder einer die Wischleiste führenden Schiene angreifen. In letzterem Fall wirken diese Federzungen jeweils auf eine Kralle ein, wobei diese Krallen die Wischleiste oder die die Wischleiste führende Schiene führen und abstützen. Die Krallen gehören dabei jeweils zu einem relativ zum Tragbügel schwenkbaren Krallenbügel. Dabei hat jeder Krallenbügel koaxial ausgerichtete, seitlich abstehende Lagerzapfen, die in entsprechende Lageraufnahmen am Tragbügel eingreifen. Besonders bevorzugt wird dabei eine Ausführung, bei der diese Lagerzapfen in Längsnuten am Tragbügel eingreifen, wobei dann eine Längsverschiebung der Krallenbügel relativ zum Tragbügel durch Halteelemente verhindert wird, die am Stahlfederband ausgebildet sind. Eine solche Lösung hat nämlich den Vorteil, daß der Tragbügel mit seinen durchgehenden Längsnuten wegen des über die Länge konstanten Querschnittes aus Kunststoff extrudiert oder aus Aluminium stranggepreßt werden kann, was die Herstellkosten wesentlich reduziert. Beim Herausstanzen der als Halteelemente dienenden Durchbrüche in dem Federband entstehen dagegen keine zusätzlichen Arbeitskosten. Grundsätzlich sind aber auch Ausführungen denkbar, bei denen jeder dieser Krallenbügel mit seinen Lagerzapfen unmittelbar an Lagerflächen am Federband gelagert ist, das seinerseits gegen Längsverschiebung gesichert am Tragbügel fixiert ist.

Bei solchen Ausführungen, bei denen die Federzungen auf einzelne Krallenbügel wirken, wird man zur Realisierung des Grundgedankens der vorliegenden Erfindung auch wenigstens einen Krallenbügel so anordnen, daß er ausgehend von seiner Anlenkstelle am Tragbügel in eine andere Richtung zeigt wie die meisten anderen Krallenbügel, wobei eine solche Lösung natürlich auch dann mit Vorteil eingesetzt werden kann, wenn anstelle einer einstückigen Ausbildung der Mittel zur Abstützung der Wischleiste einzelne Federelemente für jeden Krallenbügel verwendet werden. Außerdem bringt gegenüber den bekannten Ausführungen auch schon die Führung des Endbereiches der Wischleiste durch einen abweichend von den anderen Krallenbügeln ausgerichteten Krallenbügel eine Verbesserung des Wischbildes, selbst wenn dieser Krallenbügel nicht federnd am Tragbügel abgestützt ist.

Zur Lagerung der einander benachbarten in entgegengesetzten Richtungen zeigenden Krallenbügel gibt es mehrere Alternativen. Bei einer ersten Ausführung wird einer der Krallenbügel direkt an dem anderen Krallenbügel schwenkbar gelagert. Dies bedingt eine unterschiedliche Ausbildung der einzelnen Krallenbügel. Bei einer anderen Ausführung werden die Krallenbügel unabhängig voneinander jeweils unmittelbar am Tragbügel und/oder dem geeignet geformten Federband schwenkbeweglich gelagert. Dabei ist ein erhöhter Platzbedarf erforderlich, jedoch können alle Bügel in gleicher Weise aus einem Werkzeug gefertigt werden. Denkbar ist eine Ausführung, bei der jeweils ein Lagerzapfen eines Krallenbügels in einer Lagerbohrung am Tragbügel und ein anderer Lagerzapfen in einer Lagerbohrung im anderen Krallenbügel gelagert ist. Diese Lösung verbindet den Vorteil eines geringen Platzbedarfes mit dem Vorteil einer gleichen Ausbildung aller Krallenbügel. Bei manchen Ausführungen wird eine Lösung bevorzugt, bei der die beiden Krallenbügel aus Stabilitätsgründen an einem gemeinsamen Gelenkbolzen angelenkt werden.

Die Erfindung und deren vorteilhafte Ausgestaltungen werden in den Unteransprüchen und nachstehend anhand der in der Zeichnung dargestellten Ausführungsbeispiele näher erläutert. Es zeigen:
- Fig. 1: einen Teillängsschnitt durch einen Scheibenwischer,
- Fig. 2: einen Schnitt längs der Schnittlinie E1 in Fig. 1,
- Fig. 3: einen Schnitt längs der Schnittlinie E2 in Fig. 1,
- Fig. 4: einen Querschnitt längs der Schnittlinie IV-IV,
- Fig. 5: einen Querschnitt längs der Schnittlinie V-V ohne Wischleiste,
- Fig. 6: einen Querschnitt längs der Schnittlinie VI-VI in Fig. 1 ohne Wischleiste,
- Fig. 7: eine Seitenansicht eines Krallenbügels,
- Fig. 8: eine Draufsicht in Pfeilrichtung P auf Fig. 7,
- Fig. 9: eine Ansicht eines anderen Krallenbügels und
- Fig.10: die zugehörige Draufsicht in Pfeilrichtung P,
- Fig.11: einen Querschnitt ähnlich dem von Fig. 5 bei einem anderen Ausführungsbeispiel,
- Fig.12: einen Teillängsschnitt durch einen anderen Scheibenwischer,
- Fig.13: einen Schnitt längs der Schnittlinie E3 in Fig. 12,
- Fig.14: einen Querschnitt längs der Schnittlinie XIV-XIV,
- Fig.15: einen Querschnitt längs der Schnittlinie XV-XV,
- Fig.16: einen Querschnitt längs der Schnittlinie XVI-XVI in Fig. 12,
- Fig.17: einen Teillängsschnitt durch ein weiteres Ausführungsbeispiel eines Scheibenwischers,
- Fig.18: eine Ansicht in Pfeilrichtung P,
- Fig.19: eine Ansicht auf ein Federband für den Scheibenwischer nach den Fig. 17 und 18,
- Fig.20: einen Querschnitt entlang der Schnittlinie XX-XX,
- Fig.21: einen Querschnitt längs der Schnittlinie XXI-XXI,
- Fig.22: einen Teillängsschnitt durch ein weiteres Ausführungsbeispiel eines Scheibenwischers,
- Fig.23: eine Ansicht in Pfeilrichtung P auf Fig. 22,
- Fig.24: einen Teillängsschnitt durch ein weiteres Ausführungsbeispiel eines Scheibenwischers,
- Fig.25: einen Schnitt entland der Schnittlinie XXV-XXV,,
- Fig.26: einen Teilschnitt entlang der Schnittlinie XXVI-XXVI,
- Fig.27: eine Ansicht in Pfeilrichtung P auf Fig. 26 und
- Fig.28: einen Querschnitt längs der Schnittlinie XXVIII-XXVIII in Fig. 27.

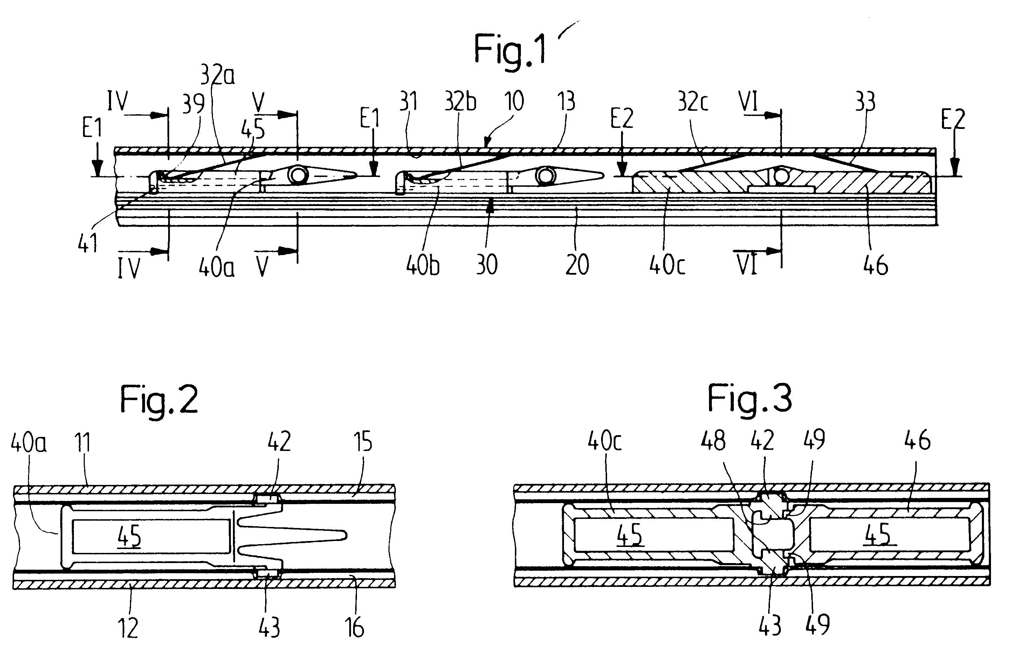

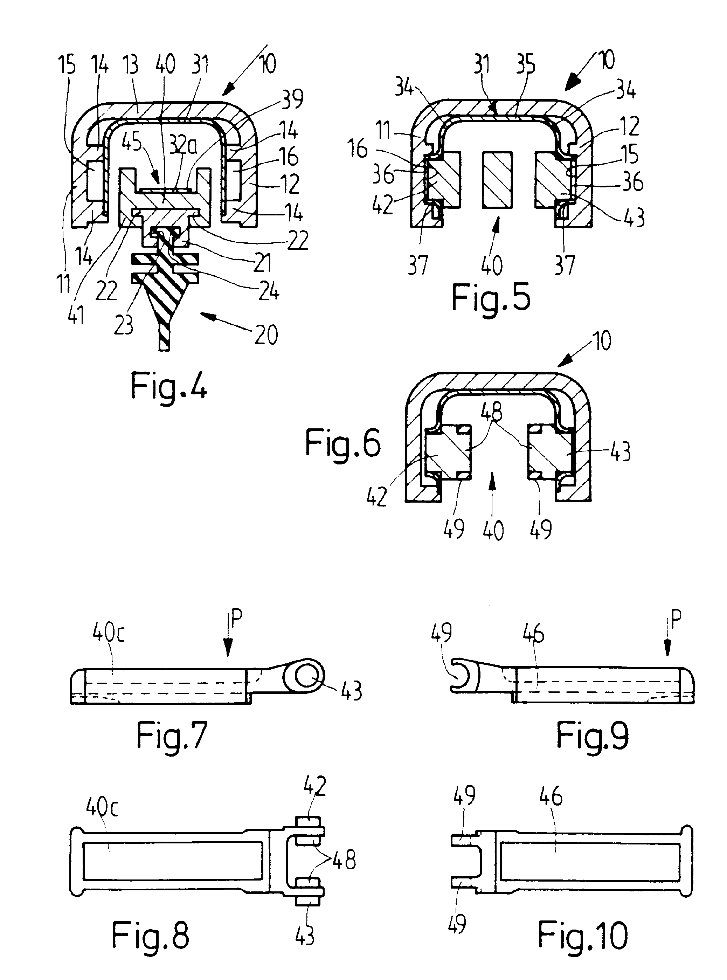

In Fig. 1 ist mit 10 der Tragbügel eines Scheibenwischers bezeichnet, der - vergleiche Fig. 4 - einen im wesentlich U-förmigen Querschnitt mit zwei Seitenwangen 11 und 12 und einem diese Seitenwangen verbindenden Steg 13 aufweist. An den einander benachbarten inneren Seitenflächen dieser Seitenwangen 11 und 12 ist jeweils durch vorspringende Leisten 14 eine Längsnut 15, 16 gebildet, deren Bedeutung später beschrieben wird. Dieser Tragbügel 10 hat über seine gesamte Länge einen gleichbleibenden Querschnitt und ist vorzugsweise aus Kunststoff extrudiert oder aus Aluminium stranggepreßt. Bei Verwendung geeigneter Werkstoffe in einer geeigneten Dimensionierung kann durchaus ein ausreichend formstabiler Tragbügel geschaffen werden, der aber dennoch kein großes Gewicht aufweist.

Zu dem Scheibenwischer gehört außerdem eine Wischleiste 20, die aus einem geeigneten Material vorzugsweise in einem Extrusionsverfahren hergestellt ist. Bei dem Ausführungsbeispiel nach Fig. 4 ist diese an sich bekannte Gummiwischleiste 20 in einer Schiene 21 geführt, die für eine ausreichende Verteilung des nur punktweise eingeleiteten Anpreßdrucks sorgt. Diese Schiene 21 hat seitlich abstehende Flansche 22 und eine Aufnahmenut 23 für einen Kopfteil 24 der Wischleiste 20. Diese Schiene 21 ist üblicherweise aus Kunststoff gefertigt und ebenfalls kostengünstig in einem Extrusionsverfahren hergestellt.

Schließlich gehören zu diesem Scheibenwischer noch Mittel zur federnden Abstützung der Wischleiste 20 an dem starren Tragbügel 10. Diese Mittel werden insgesamt mit 30 bezeichnet. Zu diesen Mitteln gehört ein Stahlfederband 31, aus dem einzelne Federzungen 32a, b, c herausgestanzt sind, die alle in die gleiche Richtung, nämlich in Fig. 1 nach links zeigen. Eine weitere Federzunge 33 zeigt dagegen in die entgegengesetzte rechte Richtung, was in Fig. 1 deutlich erkennbar ist. Zu den Mitteln zur federnden Abstützung der Wischleiste 20 gehören also neben den in die erste Richtung zeigenden Federzungen 32 eine in die zweite Richtung und dort auf einen Endbereich der Wischleiste 20 wirkende Federzunge 33. Es wird bei dieser Gelegenheit darauf hingewiesen, daß für die vorliegende Erfindung wesentlich ist, daß ein Federelement vorhanden ist, das auf den Endbereich der Wischleiste wirkt. Im einfachsten Fall ist dies ebenfalls eine Federzunge, doch kann auch ein anderes federndes Element vorgesehen werden, welches beispielsweise auch unabhängig von den Federzungen 32 als separates Bauteil eingesetzt werden könnte.

Das in die zweite Richtung wirkende Federelement 33 wirkt bei einer bevorzugten Ausführung auf das antriebsferne Ende der Wischleiste 20. Der Drehpunkt für diesen Scheibenwischer nach Fig. 1 liegt also links von der Federzunge 32a. Diese Ausbildung wird gewählt, weil dann mit einem Federelement mit einer erhöhten Anpreßkraft der üblicherweise einen gewölbten Scheibenabschnitt überstreichende Endabschnitt der Wischleiste stärker beaufschlagt wird, so daß auch dort noch eine einwandfreie Wischwirkung erzielt wird.

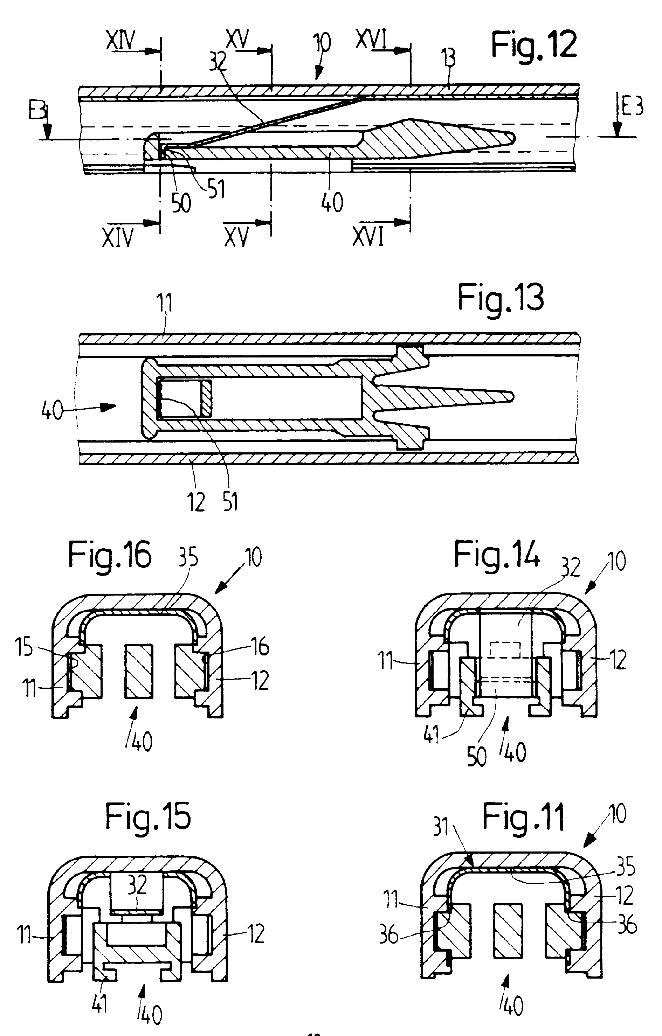

Zu den Mitteln zur federnden Abstützung der Wischleiste gehören außerdem Krallenbügel 40, die relativ zum Tragbügel 10 schwenkbar gelagert sind. Diese Krallenbügel 40 haben an ihrem freien Ende Krallen 41, welche den entsprechenden Flansch 22 an der Schiene 21 umgreifen und damit diese die Wischleiste führende Schiene 21 ihrerseits führen und abstützen. Im Abstand von diesem Krallenbereich bei 41 haben diese Krallenbügel 40 koaxial zueinander ausgerichtete seitlich abstehende Lagerzapfen 42 und 43, die in die Längsnuten 15, 16 in den Seitenwangen 11, 12 des Tragbügels 10 eingreifen. Diese Längsnuten 15, 16 dienen damit gewissermaßen als Lageraufnahmen für diese Krallenbügel 40. Allerdings muß nun zusätzlich eine Sicherung gegen eine Längsverschiebung der Krallenbügel innerhalb dieser Längsnuten verhindert werden. Dies wird erreicht durch eine besondere Ausgestaltung des Federbandes 31, das wenigstens abschnittsweise einen im wesentlichen U-förmigen Querschnitt mit zwei Seitenschenkeln 34 und einen diese Seitenschenkel verbindenden Rücken 35 aufweist, wobei in diese Seitenschenkel 34 als Halteelemente dienende Bohrungen bzw. Durchbrüche 36 eingearbeitet sind, in die diese Lagerzapfen 42, 43 eintauchen. In den Fig. 5 und 11 sind unterschiedliche Varianten zur Lagerung dieser Krallenbügel 40 dargestellt. Bei der Ausführung nach Fig. 5 schließt sich an den geschlossenen Durchbruch 36 ein Ringflansch 37 an, so daß die Lagerfläche für die Lagerzapfen 42, 43 vergrößert wird. Bei einer solchen Ausführung kann auch davon gesprochen werden, daß die Krallenbügel ausschließlich an dem Federband gelagert sind, selbst wenn dieser Ringflansch 37 in die Längsnut 15, 16 eintaucht. Bei der anderen Ausführung nach Fig. 11 fehlt dieser Ringflansch 37 und der Durchbruch 36 im Federband 31 dient nur zur Sicherung gegen eine Längsverschiebung. Insgesamt kann also festgestellt werden, daß diese Krallenbügel am Tragbügel und/oder an dem Federband schwenkbar gelagert werden. Insbesondere aus Fig. 2 geht hervor, daß jeder Krallenbügel eine Führungsaufnahme 45 aufweist, in die zugehörige Federzunge 32 mit ihrem abgerundeten Endbereich 39 eingreift. Aufgrund dieses abgerundeten Endbereichs 39 wird die Gleitreibung und damit der Verschleiß an der Berührungsstelle zwischen den Federzungen 32 und dem Krallenbügel 40 reduziert..

Aus Fig. 1 geht hervor, daß der Scheibenwischer mehrere Krallenbügel 40a, b, c aufweist, die ausgehend von ihrer Anlenkstelle alle in die gleiche Richtung, und zwar in die Richtung der Federzungen 32 zeigen. Darüberhinaus gehört zu diesem Scheibenwischer aber auch ein Krallenbügel 46, der in die entgegengesetzte Richtung zum Endbereich der Wischleiste hin zeigt und von der Federzunge 33 beaufschlagt wird. Anhand der Fig. 3 und 7 bis 10 wird im folgenden erläutert, wie dieser Krallenbügel 46 gelagert wird. Aus den Fig. 7 und 8 geht hervor, daß der Krallenbügel 40c neben den Lagerzapfen 42, 43 zur eigenen Anlenkung am Tragbügel 10 weitere Lagerzapfen 48 aufweist. Der benachbarte Krallenbügel 46 hat dazu entsprechende maulartige Lageraufnahmen 49, die auf diese Lagerzapfen 48 aufrastbar sind. Bei diesem Ausführungsbeispiel ist also der in die zweite Richtung zeigende Krallenbügel 46 an dem benachbarten, in die erste Richtung zeigenden Krallenbügel 40c unmittelbar angelenkt.

Die Ausführung nach den Fig. 12 bis 16 unterscheidet sich von der bisher beschriebenen Ausführung im wesentlichen dadurch, daß nun die einzelnen Krallenbügel 40 gegen eine Längsverschiebung relativ zum Tragbügel durch als Halteelemente dienende Laschen 50 gesichert werden, die am Ende einer jeden Federzunge 32 abgewinkelt sind und in einen entsprechend ausgebildeten Schlitz 51 am zugeordneten Krallenbügel 40 eingreifen. Bei dieser Ausführungsform ist eindeutig der Krallenbügel 40 an den Längsnuten 15, 16 abgestützt und gelagert. Eine Lagerfunktion wird bei diesem Ausführungsbeispiel von dem Federband nicht übernommen. Bei dieser Ausführung nach Fig. 12 wird die Verschiebungssicherung am Ende der Federzunge 32 vorgesehen, weil in diesem Bereich ohnehin eine Auflage der Federzunge 32 und damit ein Kontakt mit dem Krallenbügel 40 gegeben ist.

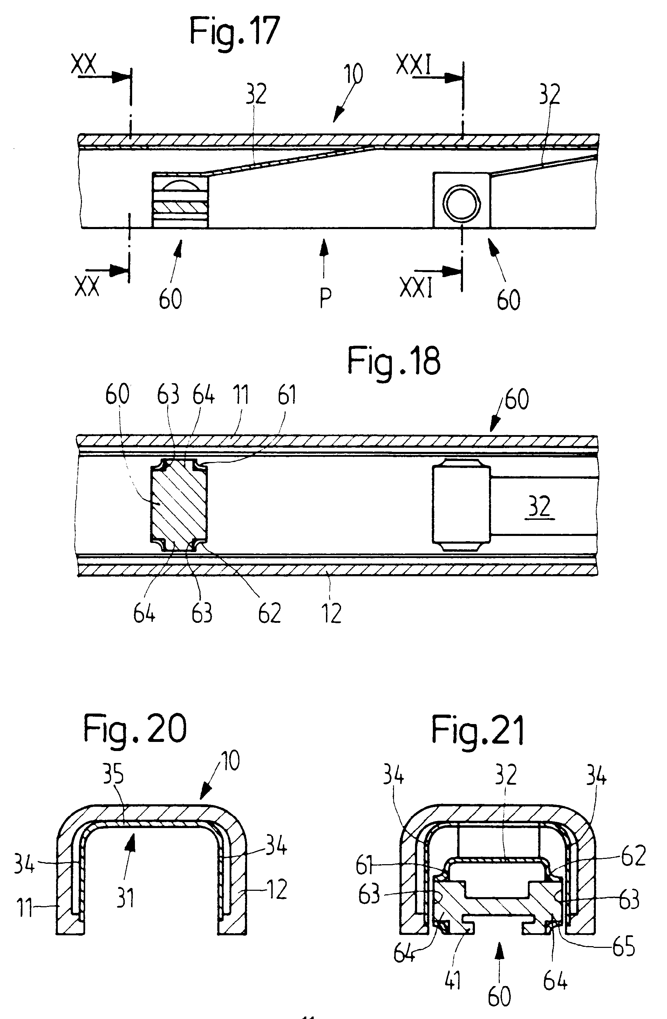

Das Ausführungsbeispiel nach den Fig. 17 bis 21 unterscheidet sich prinzipiell von den bisher beschriebenen Ausführungsformen dadurch, daß nunmehr keine längeren Krallenbügel mehr verwendet werden, die am Tragbügel abgestützt bzw. gelagert sind, sondern daß Einzelkrallen 60 mittelbar am Ende der einzelnen Federzungen 32 schwenkbeweglich gelagert werden. Dazu hat jede Federzunge 32 einen im Querschnitt U-förmigen Endabschnitt, wobei in die Seitenschenkel 61, 62 koaxial zueinander ausgerichtete Lagerbohrungen 63 eingearbeitet sind, in die die Lagerzapfen 64 der entsprechend ausgebildeten Einzelkrallen 60 eingreifen. Dabei kann sich an die Lagerbohrungen 63 wieder ein Ringflansch 65 zur Vergrößerung der Lagerfläche anschließen. Fig. 20 zeigt, daß das auch in anderen Bereichen zumindest abschnittsweise U-förmig abgewinkelte Federband 31 in dem ebenfalls U-förmig ausgebildeten Tragbügel 10 eingerastet und durch Hinterschneidungen an den Seitenwangen 11, 12 gehalten wird. Fig. 19 zeigt eine Ansicht auf das Federband 31 vor dem Abwinkeln der Seitenschenkel 61 und 62 an den Endbereichen der Federzungen 32. Aus dieser Darstellung geht ebenfalls deutlich hervor, daß alle Federzungen 32 einstückig miteinander verbunden sind.

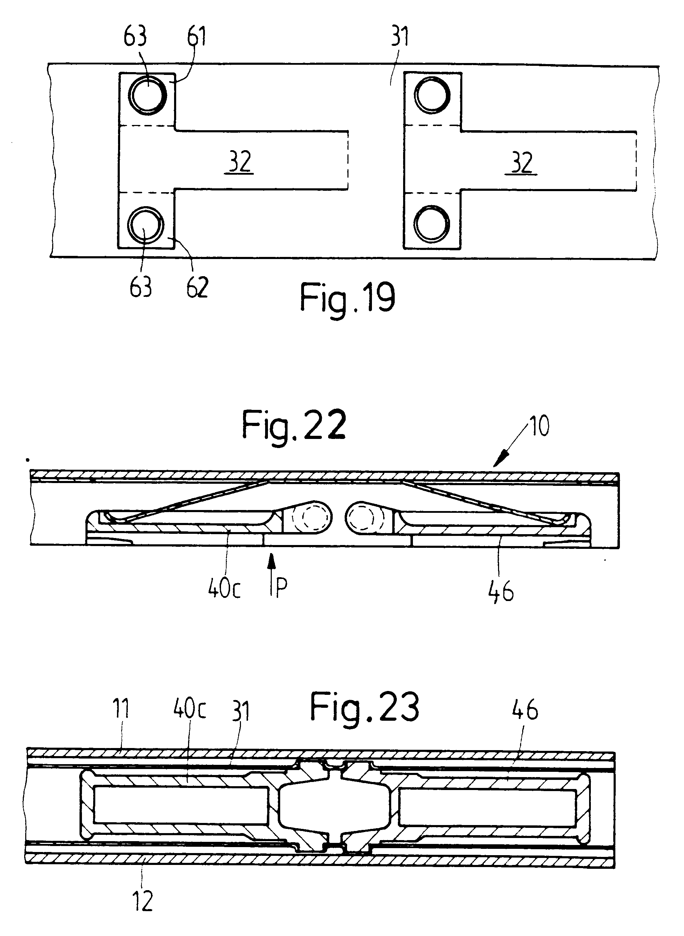

In den Fig. 22 und 23 ist eine Ausführung dargestellt, bei der die einander benachbarten, in entgegengesetzte Richtungen zeigenden Krallenbügel 40c und 46 je für sich getrennt am Tragbügel und/oder am Federband gelagert sind. Die Lagerung des Bügels 40c entspricht also der Ausführung nach Fig. 1, 3 und der benachbarte in die andere Richtung zeigende Krallenbügel 46 ist in gleicher Weise gelagert. Bei einer solchen Ausführung können also gleiche Krallenbügel verwendet werden unabhängig von der Montagerichtung.

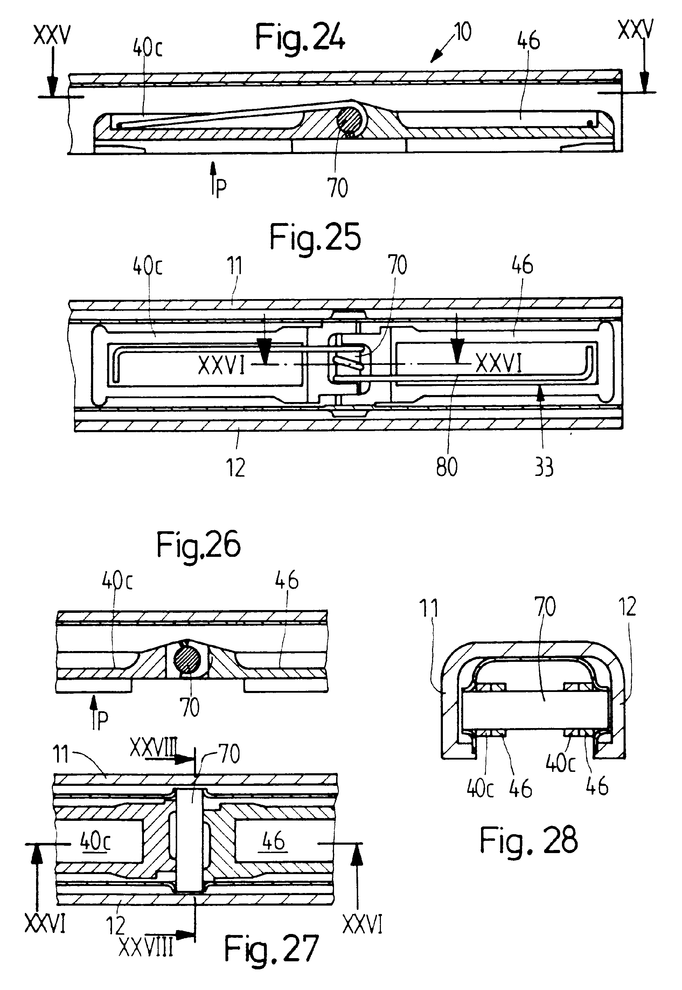

In den Fig. 24 bis 28 ist schließlich ein weiteres Ausführungsbeispiel dargestellt, bei der die einander benachbarten, in entgegengesetzte Richtungen zeigenden Krallenbügel 40c, 46 beide auf einem zusätzlichen Gelenk- oder Lagerzapfen 70 schwenkbar gelagert sind. Insbesondere aus den Fig. 25 und 27 geht hervor, daß durch einen seitlichen Versatz der maulartigen Lageraufnahmen an den Krallenbügeln 40c bzw. 46 wiederum eine baugleiche Ausführung unabhängig von der Montagerichtung möglich ist. Schließlich zeigt Fig. 24, 25 auch eine Ausführung, bei der das in die zweite Richtung wirkende Federelement 33 unabhängig von den Federzungen als Schenkelfeder 80 ausgebildet ist. Dabei kann es sich um eine einarmige Schenkelfeder handeln, jedoch wird eine Ausführung mit einer zweiarmigen Schenkelfeder bevorzugt, wobei dann der andere Arm auf den benachbarten Krallenbügel 40c wirkt. Diese Schenkelfeder 80 wirkt also in unterschiedlichen Drehrichtungen auf zwei entgegegesetzt ausgerichtete, an der gleichen Lagerstelle gelagerte Krallenbügel. Im übrigen kann der Scheibenwischer Federzungen ähnlich der Ausführung nach Fig. 1 aufweisen. Allerdings sind durchaus auch Ausführungen denkbar, bei denen noch andere Krallenbügel paarweise zusammengefaßt werden und über eine zweiarmige Schenkelfeder federnd aneinander abgestützt sind.

## Patentansprüche

1. Scheibenwischer, insbesondere für Kraftfahrzeuge, mit einem Tragbügel (10), mit einer Wischleiste (20) und mit Mitteln zur federnden Abstützung der Wischleiste (20) an dem Tragbügel (10), wobei zu diesen Mitteln zur federnden Abstützung der Wischleiste (20) mehrere in eine erste Richtung zeigende Federzungen (32) und wenigstens eine, entgegengesetzt der ersten Richtung zeigende Federzunge (33) gehören und der Tragbügel (10) einen wenigstens annähernd U-förmigen Querschnitt mit zwei Seitenwangen (11,12) und einen diese Seitenwangen (11,12) verbindenden Steg (13) aufweist, **dadurch gekennzeichnet,** daß an diesem Tragbügel (10) einzelne die Wischleiste (20) führende und abstützende Krallenbügel (40,46) mit seitlich abstehenden, koaxial zueinander ausgerichteten Lagerzapfen (42,43) schwenkbar angelenkt und durch die Federzungen (32) gegen den Tragbügel (10) abgestützt sind und daß jeweils eine Federzunge (32 und 33) bzw. ein diesen Federzungen zugeordneter Krallenbügel direkt den Endbereich der Wischleiste beaufschlagen.

2. Scheibenwischer nach Anspruch 1. dadurch gekennzeichnet, daß alle Federzungen (32) einstückig miteinander verbunden und vorzugsweise aus einem Stahlfederband ausgestanzt sind und als Federband (31) vorliegen.

3. Scheibenwischer nach einem der vorstehenden Ansprüche, dadurch gekennzeichnet, daß das Federband (31) wenigstens abschnittsweise einen im wesentlichen U-förmigen Querschnitt mit zwei Seitenschenkeln (34) und einen diese Seitenschenkel (34) verbindenden Rücken (35) aufweist und daß die Seitenschenkel (34) als Halteelemente dienende Durchbrüche (36) aufweisen.

4. Scheibenwischer nach einem der vorhergehenden Ansprüche, dadurch gekennzeichnet, daß die Lagerzapfen (42, 43) der Krallenbügel (40, 46) in entsprechende Durchbrüche (36) am Federband (31) eingreifen und daß jeder Durchbruch (36) von einem als Lagerfläche für den Lagerzapfen (42, 43) dienenden Ringflansch (37) umgeben ist.

5. Scheibenwischer nach einem der vorstehenden Ansprüche, dadurch gekennzeichnet, daß die Federzunge (32) eine umgebogene Lasche (50) aufweist, die als Halteelement dient und in einen entsprechend ausgebildeten Schlitz (31) am Krallenbügel (40, 46) greift.

6. Scheibenwischer nach einem der vorstehenden Ansprüche, dadurch gekennzeichnet, daß die Lasche (50) am Ende der Federzunge (32) angeordnet ist.

## Claims

1. A windshield wiper, especially for motor vehicles comprising a carrier yoke (10), a rubber element (20) and means for the resilient support of the rubber element (20) on the carrier yoke (10) whereby for the resilient support of the rubber element (20) these means include several resilient lugs (32) pointing into a first direction and at least one resilient lug (33) pointing into the direction opposite to the first direction and with the carrier yoke (10) is of an at least approximately U-shaped cross-section with two side walls (11,12) and comprises a web (12) connecting these side walls (11,12), characterized in that separate clawed yokes (40,46) guiding and supporting the rubber element (20) and provided with bearing pins (42,42) laterally sticking out and coaxially arranged to each other are swivellably mounted onto this carrier yoke (10) and which are supported by means of the resilient lugs (32) against the carrier yoke (10) and in that each of the resilient lugs (32 and 33) or a clawed yoke associated to these resilient lugs directly act upon the end area of the rubber element.

2. A windshield wiper according the claim 1, characterized in that all resilient lugs (32) are integrally connected with each other and punched out from a flexible strip preferably made of steel and which are flexible strip (31).

3. A windshield wiper according to one of the preceding claims, characterized in that the flexible strip (31) at least in sections is of a substantially U-shaped cross-section with two legs (34) and comprises a back (35) connecting these legs (34) and in that the legs (34) include apertures (36) serving as holding elements.

4. A windshield wiper according to one of the preceding claims, characterized in that the bearing pins (42,43) of the clawed yokes (40,46) engage into respective apertures (36) at the flexible strip (31) and in that each aperture (36) is surrounded by a ring flange (37) serving as a bearing area for the bearing pins (42,43).

5. A windshield wiper according to one of the preceding claims, characterized in that the resilient lug (32) includes a bent strap (50) serving as a holding element and engages into a slot (51) formed respectively on the clawed yoke (40,46).

6. A windshield wiper according to one of the preceding claims, characterized in that the strap (50) is located at the end of the flexible strip (32).

## Revendications

1. Essuie-glace, notamment pour véhicule automobile, comprenant un étrier de support (10), une lame d'essuyage (20) et des moyens permettant un appui élastique de la lame d'essuyage (20) sur l'étrier de support (10), ces moyens d'appui élastique de la lame d'essuyage (20) comprenant plusieurs languettes élastiques (32) orientées dans une première direction et au moins une languette élastique (33) orientée dans la direction opposée à la première direction, tandis que l'étrier de support (10) a au moins approximativement une section transversale en forme de U comportant deux joues latérales (11, 12) et un dos (13) réunissant ces joues latérales (11, 12), caractérisé en ce que des étriers (40, 46) à griffes, indépendants et servant à guider et soutenir la lame d'essuyage (20), sont articulés d'une manière basculante sur l'étrier de support (10), par des tourillons (42, 53) en saillie latérale et à axes alignés l'un avec l'autre en prenant appui sur cet étrier de support (10) par l'intermédiaire des languettes élastiques (32), et en ce que, dans chaque zone extrême de la lame d'essuyage, une languette élastique (32 et 33), ou un étrier à griffes associé à cette languette élastique, agit directement sur cette zone extrême de la lame d'essuyage.

2. Essuie-glace suivant la revendication 1, caractérisé en ce que toutes les languettes élastiques (32) qui sont réunies entre elles d'une seule pièce et sont de préférence obtenues par découpage à l'emporte-pièce à partir d'une bande d'acier à ressort et se présentent sous la forme d'une bande élastique (31).

3. Essuie-glace suivant l'une des revendications précédentes, caractérisé en ce qu'au moins par tronçons, la bande d'acier à ressort (31) a une section transversale pratiquement en U comportant deux branches latérales (34) et un dos (35) réunissant ces branches latérales (34) et en ce que ces dernières comportent des lumières (36) servant d'éléments de maintien.

4. Essuie-glace suivant l'une des revendications précédentes, caractérisé en ce que les tourillons (42, 43) des étriers (40, 46) à griffes s'emboîtent dans des lumières correspondantes (36) ménagées sur la bande d'acier à ressort (31) et en ce que chaque lumière (36) est entourée par une collerette annulaire (37) servant de surface de portée pour le tourillon (42, 43) associé.

5. Essuie-glace suivant l'une des revendications précédentes, caractérisé en ce que la languette élastique (32) comporte une patte (50) coudée qui sert d'élément de maintien et s'engage dans une fente (31), de forme correspondante, ménagée sur l'étrier (40, 46) à griffes.

6. Essuie-glace suivant l'une des revendications précédentes, caractérisé en ce que la patte (50) est disposée à l'extrémité de la languette élastique (32).
